(19) 

Europäisches
Patentamt
European
Patent Office
Office européen
des brevets

(11) **EP 4 626 083 A1**

(12) **EUROPEAN PATENT APPLICATION**
published in accordance with Art. 153(4) EPC

(43) Date of publication:
**01.10.2025 Bulletin 2025/40**

(21) Application number: **23899755.5**

(22) Date of filing: **21.11.2023**

(51) International Patent Classification (IPC):
*H04W 48/20* (2009.01)

(52) Cooperative Patent Classification (CPC):
**H04W 48/06; H04W 48/16; H04W 48/20**

(86) International application number:
**PCT/CN2023/132839**

(87) International publication number:
**WO 2024/120176 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.12.2022 CN 202211586738**

(71) Applicant: **Huawei Technologies Co., Ltd.
Shenzhen, Guangdong 518129 (CN)**

(72) Inventors:
• **HOU, Hailong
Shenzhen, Guangdong 518129 (CN)**
• **JIN, Zhe
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD, APPARATUS AND SYSTEM**

(57)     This application relates to the field of wireless communication, and in particular, to cell selection and cell reselection in a wireless communication system, and provides a communication method, apparatus, and system, to resolve a problem in a conventional technology that a cell selection parameter cannot match a requirement of a service rate supported by a terminal, thereby improving communication quality. The method includes:

A network device determines one or more groups of values of a cell selection parameter, where there is an association relationship between the one or more groups of values of the cell selection parameter and one or more pieces of service information; and the network device sends the one or more groups of values of the cell selection parameter.

FIG. 2

EP 4 626 083 A1

**Description**

**TECHNICAL FIELD**

Embodiments of this application relate to the communication field, and more specifically, to a communication method, apparatus, and system.

**BACKGROUND**

In a conventional technology, a terminal device camps on a suitable cell through cell selection or cell reselection. In a process of selecting a cell for camping on, the terminal device receives a cell selection parameter sent by a network device, and when it is determined that measured signal strength and signal quality of a cell meet a threshold indicated by the cell selection parameter, the terminal device selects the current cell to camp on.

However, a higher service rate supported by the terminal device or a higher rate required by a service of the terminal device indicates higher signal strength and signal quality required by the terminal device, and a higher necessity for the terminal device to select a cell with good communication quality to camp on during cell selection or reselection. The service rate requirement varies between different application scenarios. Particularly, in a machine-to-machine (machine-to-machine, M2M) network, there are many typical application scenarios, and service rate requirements are diversified. For example, a typical service rate in an industrial wireless sensor network scenario may be lower than 2 Mbps, and a typical service rate in a video surveillance scenario may exceed 10 Mbps. In the conventional technology, the cell selection parameter sent by the network device leads to a case in which after a terminal device that supports a high-rate service selects a cell for camping on, the network device cannot meet a requirement of the high-rate service of the terminal device, or a terminal device that supports a low-rate service and whose requirement can be met by the network device cannot camp on a cell. Problems in the conventional technology seriously affect communication quality.

**SUMMARY**

This application provides a communication method, apparatus, and system, to resolve a problem in a conventional technology that a cell selection parameter cannot match a requirement of a service rate supported by a terminal, thereby improving communication quality.

According to a first aspect, a communication method is provided. The method is performed by a network device, or may be performed by a component (for example, a circuit or a chip) configured in the network device, or one or more modules of the network device. This is not limited in this application. The method includes: The network device determines one or more groups of values of a cell selection parameter, where there is an association relationship between the one or more groups of values of the cell selection parameter and one or more pieces of service information; and the network device sends the one or more groups of values of the cell selection parameter.

Based on the foregoing technical solution, the network device may configure different cell selection parameters for different service rates or service information. In this case, when selecting a cell for camping on, a terminal device may select, based on a service supported by the terminal device or a service requirement of the terminal device, a suitable cell to camp on. For example, for a high-rate service, a cell selection parameter configured by the network device corresponds to a higher signal quality requirement. This ensures communication quality of the high-rate service after the terminal device camps on a cell, and avoids a case in which quality of service of the high-rate service cannot be met after the terminal device camps on the cell. In addition, for a low-rate service, a cell selection parameter configured by the network device corresponds to a lower signal quality requirement, and a terminal device farther away from a cell may also camp on the cell. This expands a coverage area of the network device. Therefore, the foregoing technical solution resolves a problem in a conventional technology that a cell selection parameter cannot match a requirement of a service rate supported by a terminal, thereby ensuring communication quality, improving quality of service of the service, and expanding the coverage area of the network device.

In a possible design, the association relationship is predefined, or the association relationship is sent by the network device.

When the association relationship is predefined, signaling resources occupied for configuring the association relationship can be saved. If the association relationship is sent by the network device, flexibility of configuring the association relationship may be improved, and the network device may adjust the association relationship as required.

In a possible design, the one or more groups of values of the cell selection parameter are in one-to-one correspondence with the one or more pieces of service information.

In a possible design, the network device sends the one or more groups of values of the cell selection parameter by using a broadcast signal; or the network device sends the one or more groups of values of the cell selection parameter and the association relationship by using a broadcast signal.

In a possible design, the one or more groups of values of the cell selection parameter are used for cell selection or cell reselection.

In a possible design, a group of values of the cell selection parameter indicates at least one of required minimum reference signal received power RSRP for cell selection or required minimum reference signal received quality RSRQ for cell selection.

In a possible design, the service information includes service rate information, or the service information includes a service type.

In a possible design, the one or more pieces of service information are determined by a core network, or the one or more pieces of service information are determined by a radio access network RAN.

According to a second aspect, a communication method is provided. The method is performed by a terminal device, or may be performed by a component (for example, a circuit or a chip) configured in the terminal device, or one or more modules of the terminal device. This is not limited in this application. The method includes: The terminal device receives one or more groups of values of a cell selection parameter sent by a network device, where there is an association relationship between the one or more groups of values of the cell selection parameter and one or more pieces of service information; and the terminal device performs cell selection based on the one or more groups of values of the cell selection parameter.

Based on the foregoing technical solution, the terminal device may receive different cell selection parameters configured for different service rates or service information by the network device. In this case, when selecting a cell for camping on, the terminal device may select, based on a service supported by the terminal device or a service requirement of the terminal device, a suitable cell to camp on. For example, a terminal device with a high-rate service determines a cell selection parameter based on the service of the terminal device, and the cell selection parameter corresponds to a higher signal quality requirement. Therefore, the terminal device does not camp on a cell with poor communication quality. This ensures communication quality of the high-rate service after the terminal device camps on a cell, and avoids a case in which quality of service of the high-rate service cannot be met after the terminal device camps on the cell. In addition, a terminal device with a low-rate service determines a cell selection parameter based on the service of the terminal device, and the cell selection parameter corresponds to a lower signal quality requirement. Therefore, the terminal device may camp on a cell by using a lower threshold, and a terminal device farther away from the cell may also camp on the cell. This expands a coverage area of the network device. Therefore, the foregoing technical solution resolves a problem in a conventional technology that a cell selection parameter cannot match a requirement of a service rate supported by a terminal, thereby ensuring communication quality, improving quality of service of the service, and expanding the coverage area of the network device.

In a possible design, the service information includes a service rate, and the method further includes: The terminal device determines a first parameter based on a service rate of one or more supported services and the association relationship, where the first parameter is a group of values in the one or more groups of values of the cell selection parameter; and the terminal device performs cell selection based on the first parameter.

In a possible design, the terminal device determines the first parameter based on a service rate of a service with a highest service rate in the one or more supported services.

Based on the foregoing technical solution, the terminal device may select, based on a service supported by the terminal device or a service with a highest service rate in a service requirement of the terminal device, a suitable cell to camp on, to ensure communication quality of the service with the highest service rate.

In a possible design, the service information includes a service type, and the method further includes: The terminal device determines a first parameter based on a service type of one or more supported services and the association relationship, where the first parameter is a group of values in the one or more groups of values of the cell selection parameter; and the terminal device performs cell selection based on the first parameter.

In a possible design, the terminal device determines the first parameter based on a service type of a service with a highest service rate in the one or more supported services.

Based on the foregoing technical solution, the terminal device may select, based on a service supported by the terminal device or a service with a highest service rate in a service requirement of the terminal device, a suitable cell to camp on, to ensure communication quality of the service with the highest service rate.

In a possible design, the association relationship is predefined, or the association relationship is sent by the network device.

When the association relationship is predefined, signaling resources occupied for configuring the association relationship can be saved. If the association relationship is sent by the network device, flexibility of configuring the association relationship may be improved, and the network device may adjust the association relationship as required.

In a possible design, the one or more groups of values of the cell selection parameter are in one-to-one correspondence with the one or more pieces of service information.

In a possible design, the terminal device receives the one or more groups of values of the cell selection parameter that are sent by the network device by using a broadcast signal; or the terminal device receives the one or more groups of values of the cell selection parameter and the association relationship that are sent by the network device by using a broadcast signal.

In a possible design, the one or more groups of values of the cell selection parameter are used for cell selection or cell reselection; and the terminal device performs cell selection or cell reselection based on the first parameter.

In a possible design, a group of values of the cell selection parameter indicates at least one of required minimum reference signal received power RSRP for cell selection or required minimum reference signal received quality RSRQ for cell selection.

In a possible design, the one or more pieces of service information are determined by a core network, or the one or more pieces of service information are determined by a radio access network RAN.

According to a third aspect, a network device is provided. The network device may perform the method provided in the first aspect. The network device specifically includes: a processing unit, configured to determine one or more groups of values of a cell selection parameter, where there is an association relationship between the one or more groups of values of the cell selection parameter and one or more pieces of service information; and a transceiver unit, configured to send the one or more groups of values of the cell selection parameter.

In a possible design, the association relationship is predefined, or the transceiver unit is further configured to send the association relationship.

In a possible design, the one or more groups of values of the cell selection parameter are in one-to-one correspondence with the one or more pieces of service information.

In a possible design, the transceiver unit is further configured to send the one or more groups of values of the cell selection parameter by using a broadcast signal; or the transceiver unit is further configured to send the one or more groups of values of the cell selection parameter and the association relationship by using a broadcast signal.

In a possible design, the one or more groups of values of the cell selection parameter are used for cell selection or cell reselection.

In a possible design, a group of values of the cell selection parameter indicates at least one of required minimum received reference signal received power RSRP for cell selection or required minimum received reference signal received quality RSRQ for cell selection.

In a possible design, the service information includes service rate information, or the service information includes a service type.

In a possible design, the one or more pieces of service information are determined by a core network, or the one or more pieces of service information are determined by a radio access network RAN.

According to a fourth aspect, a terminal device is provided. The terminal device may perform the method provided in the second aspect. The terminal device specifically includes: a transceiver unit, configured to receive one or more groups of values of a cell selection parameter sent by a network device, where there is an association relationship between the one or more groups of values of the cell selection parameter and one or more pieces of service information; and a processing unit, configured to perform cell selection based on the one or more groups of values of the cell selection parameter.

In a possible design, the service information includes a service rate, and the method further includes: The processing unit is further configured to determine a first parameter based on a service rate of one or more services supported by the terminal device and the association relationship, where the first parameter is a group of values in the one or more groups of values of the cell selection parameter; and the processing unit is further configured to perform cell selection based on the first parameter.

In a possible design, the processing unit is further configured to determine the first parameter based on a service rate of a service with a highest service rate in the one or more services supported by the terminal device.

In a possible design, the service information includes a service type, and the method further includes: The processing unit is further configured to determine a first parameter based on a service type of one or more services supported by the terminal device and the association relationship, where the first parameter is a group of values in the one or more groups of values of the cell selection parameter; and the processing unit is further configured to perform cell selection based on the first parameter.

In a possible design, the processing unit is further configured to determine the first parameter based on a service type of a service with a highest service rate in the one or more services supported by the terminal device.

In a possible design, the association relationship is predefined, or the transceiver unit is further configured to receive the association relationship sent by the network device.

In a possible design, the one or more groups of values of the cell selection parameter are in one-to-one correspondence with the one or more pieces of service information.

In a possible design, the transceiver unit is further configured to receive the one or more groups of values of the cell selection parameter that are sent by the network device by using a broadcast signal; or the transceiver unit is further configured to receive the one or more groups of values of the cell selection parameter and the association relationship that are sent by the network device by using a broadcast signal.

In a possible design, the one or more groups of values of the cell selection parameter are used for cell selection or cell reselection; and the processing unit is further configured to perform cell selection or cell reselection based on the first parameter.

In a possible design, a group of values of the cell selection parameter indicates at least one of required minimum received reference signal received power RSRP for cell selection or required minimum received reference signal received quality RSRQ for cell selection.

In a possible design, the one or more pieces of service information are determined by a core network, or the one or more pieces of service information are determined by a radio access network RAN.

According to a fifth aspect, a communication apparatus is provided. The communication apparatus includes a processor. The processor is coupled to at least one memory, and the processor is configured to read a computer program stored in the at least one memory, to perform the method according to any one of the first aspect or the possible designs of the first aspect, or perform the method according to any one of the second aspect or the possible designs of the second aspect.

According to a sixth aspect, a computer-readable storage medium is provided. The computer-readable storage medium is configured to store a computer program; and when the computer program is run on a computer, the computer is caused to perform the method according to any one of the first aspect, the second aspect, or the possible designs of the first aspect or the second aspect.

According to a seventh aspect, a computer program product is provided. When the computer program product runs on a computer, the computer is caused to perform the method according to any one of the first aspect, the second aspect, or the possible designs of the first aspect or the second aspect.

According to an eighth aspect, a chip is provided. The chip includes a processor and a communication interface. The processor is configured to read instructions or a computer program, to perform the method according to any one of the first aspect, the second aspect, or the possible designs of the first aspect or the second aspect.

According to a ninth aspect, a communication system is provided. The communication system includes the network device according to any one of the third aspect or the possible designs of the third aspect and the terminal device according to any one of the fourth aspect or the possible designs of the fourth aspect.

For beneficial effects of the third aspect to the ninth aspect and the possible designs of the third aspect to the ninth aspect, refer to the beneficial effects of the first aspect or the second aspect and the possible designs of the first aspect or the second aspect. The present invention can resolve a problem in a conventional technology that a cell selection parameter cannot match a requirement of a service rate supported by a terminal, thereby improving communication quality.

## BRIEF DESCRIPTION OF DRAWINGS

The following describes technical solutions of this application with reference to accompanying drawings.

FIG. 1 is a diagram of a communication system applicable to an embodiment of this application;
FIG. 2 is a diagram of an example of a communication method according to an embodiment of this application;
FIG. 3 is a block diagram of a communication device according to an embodiment of this application;
FIG. 4 is a block diagram of another communication device according to an embodiment of this application;
FIG. 5 is a block diagram of a communication apparatus according to an embodiment of this application; and
FIG. 6 is a block diagram of a communication system according to an embodiment of this application.

## DESCRIPTION OF EMBODIMENTS

A network architecture and a service scenario described in embodiments of the present invention are intended to describe technical solutions of embodiments of the present invention more clearly, and do not constitute a limitation on the technical solutions provided in embodiments of the present invention. A person of ordinary skill in the art may know that, with evolution of the network architecture and emergence of new service scenarios, the technical solutions provided in embodiments of the present invention are also applicable to similar technical problems.

The technical solutions in embodiments of this application are applicable to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) mobile communication system or a new radio (new radio, NR) system, where the 5G mobile communication system may be non-standalone (non-standalone, NSA) or standalone (standalone, SA).

The technical solutions provided in this application may be further applied to machine-type communication (machine-type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X can stand for everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

The technical solutions provided in this application may be further applied to a future communication system, for example, a 6th generation (6th Generation, 6G) mobile communication system. This is not limited in this application.

In embodiments of this application, a terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice and data connectivity for a user, for example, a handheld device with a wireless connection function or a vehicle-mounted device. Currently, some examples of the terminal may be a mobile phone (mobile phone), a tablet computer (pad), a computer (for example, a notebook computer or a palmtop computer) with wireless sending and receiving functions, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal (for example, a home appliance like a television, a smart box, or a game console) in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a 5G network, or a terminal device in a future evolved public land mobile network (public land mobile network, PLMN).

The wearable device may also be referred to as a wearable intelligent device or the like, and is a general term for wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that are dedicated to only one type of application function and need to work with other devices such as smartphones, for example, various smart bands or smart jewelry for monitoring physical signs.

In addition, the terminal device may alternatively be a terminal device in an internet of things (Internet of things, IoT) system. IoT is an important part in future development of information technologies. A main technical feature of the IoT is to connect things to a network by using a communication technology, to implement an intelligent network for human-machine interconnection and thing-thing interconnection. The IoT technology can achieve massive connections, deep coverage, and terminal power saving by using, for example, a narrow band (narrow band, NB) technology.

In embodiments of this application, the terminal device may alternatively be a vehicle or an entire vehicle, and may implement communication via the internet of vehicles, or may be a component located in the vehicle (for example, placed in the vehicle or installed in the vehicle), that is, an on-board terminal device, an on-board module, or an on-board unit (on-board unit, OBU).

In addition, the terminal device may alternatively include a sensor such as an intelligent printer, a train detector, or a gas station. Main functions include collecting data (some terminal devices), receiving control information and downlink data from a network device, sending an electromagnetic wave, and transmitting uplink data to the network device.

It should be noted that the terminal device in this application may be low-complexity UE, or reduced capability UE (reduced capability UE, RedCap UE), or may be normal-capability UE (normal UE or legacy UE), for example, eMBB UE. The low-complexity UE and the normal-capability UE have different feature parameters. The feature parameters include one or more of the following: a bandwidth, a quantity of supported or configured resources, a quantity of transmit antenna ports and/or a quantity of receive antenna ports, a quantity of radio frequency channels, a quantity of hybrid automatic repeat request (hybrid automatic repeat request, HARQ) processes, a supported peak rate, an application scenario, a delay requirement, a processing capability, a protocol version, a duplex mode, a service, and the like.

It should be understood that another type of terminal device that supports the technical solutions of this application, or a future new type of terminal device also falls within the protection scope of this application. In embodiments of this application, an apparatus configured to implement a function of the terminal device may be a terminal device, or may be an apparatus that can support the terminal device in implementing the function, for example, a chip system or a chip. The apparatus may be installed in the terminal device. In embodiments of this application, the chip system may include a chip, or may include a chip and another discrete component. A specific form of the terminal device is not limited in this application.

In embodiments of this application, a network device may be any device with wireless receiving and sending functions. The device includes, but is not limited to: an evolved NodeB (Evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or home NodeB, HNB), a baseband unit (baseband unit, BBU), or an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system. Alternatively, the device may be a gNB or a transmission point (transmission point, TRP or TP) in a 5G (for example, NR) system, one or one group of antenna panels (including a plurality of antenna panels) in a 5G base station, or may be a network node that forms a gNB or a transmission point, for example, a baseband unit (baseband unit, BBU), or a distributed unit (distributed unit, DU), or a base station in a next generation 6G communication system.

In some deployments, the gNB may include a central unit (central unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer finally becomes information at the PHY layer, or is converted from the information at the PHY layer. Therefore, in this architecture, higher layer signaling such as RRC layer signaling may also be considered as being sent by the DU, or by the DU and the CU. It may be understood that the network device may be a device including one or more of a CU node, a DU node, and an AAU node. In addition, the CU may be classified as a network device in an access network (radio access network, RAN), or the CU may be classified as a network device in a core network (core network, CN). This is not limited in this application.

The network device provides a service for a cell, and the terminal device communicates with the cell by using a transmission resource (for example, a frequency domain resource, namely, a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

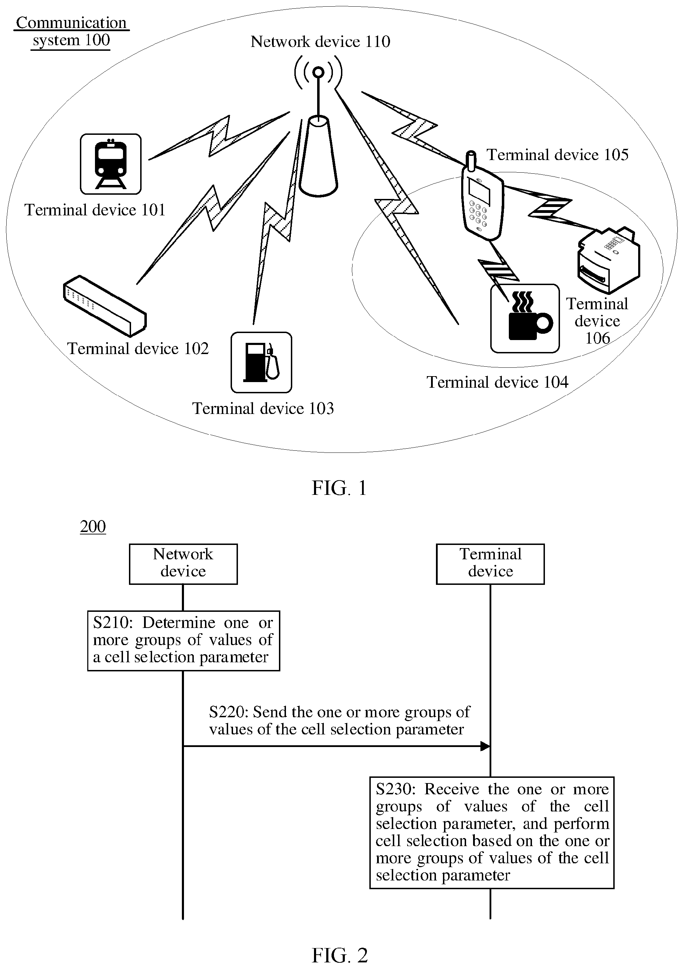

FIG. 1 is a diagram of a communication system 100 applicable to a communication method according to an embodiment of this application. As shown in FIG. 1, the communication system 100 includes at least one network device (for example, a network device 110 in FIG. 1) and at least one terminal device (for example, terminal devices 101 to 106 in FIG. 1). The network device 110 and the terminal devices 101 to 106 may communicate with each other by using one or more air interface technologies. Different terminal devices 101 to 106 may support one or more different services, and the different terminal devices 101 to 106 may have one or more service rate requirements or one or more communication quality requirements.

It may be understood that the network device and the terminal devices shown in FIG. 1 may be at fixed locations, or may be movable. In embodiments of this application, the network device and the terminal device may be deployed on land, including indoors or outdoors and handheld or vehicle-mounted, may be deployed on water, or may be deployed on an airplane, a balloon, and a satellite in the air. Scenarios in which the network device and the terminal devices are located are not limited in embodiments of this application. It may be understood that FIG. 1 is merely an example, and does not constitute any limitation on the protection scope of this application. A communication system applicable to embodiments of this application is not limited thereto. The communication method provided in embodiments of this application may further relate to a network element or a device that is not shown in FIG. 1. Certainly, the communication method provided in embodiments of this application may alternatively include only some network elements shown in FIG. 1.

The following describes some terms in embodiments of this application, to facilitate understanding of a person skilled in the art.

(1) Measured reference signal received power (reference signal received power, RSRP)

The measured RSRP is a measurement result obtained based on a received cell signal, and a specific obtaining method is not limited in embodiments of this application. The reference signal received power is usually obtained through measurement. A reference signal may be a synchronization signal/physical broadcast channel block (SS/PBCH block, SSB), a channel state information reference signal (channel state information reference signal, CSI-RS), a demodulation reference signal (demodulation reference signal, DMRS), or the like. This is not limited in the present invention. The measurement result may be directly referred to as reference signal received power (reference signal received power, RSRP), or may be referred to as a measured received level value for cell selection (Measured cell RX level value), a received level value for cell selection, the measured RSRP, or the like. Names of the measurement result are not limited in this application. For ease of description, the measurement result is uniformly described as the measured RSRP in the following.

(2) Required minimum received reference signal received power RSRP for cell selection

The required minimum received reference signal received power for cell selection/reselection (required minimum received RSRP level in the cell) is a parameter configured by a network. The parameter may be referred to as the required minimum received reference signal received power for cell selection (Minimum required RX level in the cell), a minimum required received level in the cell, a minimum required received level for cell selection, an RSRP threshold, minimum required RSRP, or the like. Names of the parameter are not limited in this application. For ease of description, the parameter is uniformly described as the RSRP threshold in the following.

(3) Measured reference signal received quality (reference signal received quality, RSRQ)

The measured RSRQ is a measurement result obtained based on a received cell signal, and a specific obtaining method is not limited in embodiments of this application. The reference signal received quality is usually obtained through measurement. A reference signal may be a synchronization signal/physical broadcast channel block (SS/PBCH block, SSB), a channel state information reference signal (channel state information reference signal, CSI-RS), a demodulation reference signal (demodulation reference signal, DMRS), or the like. This is not limited in the present invention. The measurement result may be directly referred to as reference signal received quality (reference signal received quality, RSRQ), or may be referred to as a measured cell quality value (Measured cell quality value), a cell quality value, the measured RSRQ, or the like. Names of the measurement result are not limited in this application. For ease of description, the measurement result is uniformly described as the measured RSRQ in the following.

(4) Required minimum received reference signal received quality RSRQ for cell selection

The required minimum received reference signal received quality for cell selection/reselection (required minimum received RSRQ level in the cell) is a parameter configured by a network. The parameter may be referred to as the required minimum received reference signal received quality for cell selection (Minimum required quality level in the cell), minimum required received quality in the cell, minimum required received quality for cell selection, an RSRQ threshold, minimum required RSRQ, or the like. Names of the parameter are not limited in this application. For ease of description, the parameter is uniformly described as the RSRQ threshold in the following.

(5) Master information block (Master Information Block, MIB)

The MIB is carried on a physical broadcast channel PBCH. For a cell, the MIB includes some basic configuration information of the cell, especially some parameters used for initial access, for example, a SIB1 and configuration information of a PDCCH that schedules the SIB1. A terminal device usually first decodes the MIB, and continues to receive the SIB1 and other broadcast information by using the parameters in the MIB.

(6) System information block (System Information Block, SIB)

The SIB includes a system information element. One SIB combines system information elements with a same property, and different SIBs may have different features. The SIB is carried on a PDSCH, and the PDSCH may be scheduled by a corresponding physical downlink control channel PDCCH.

The foregoing briefly describes the terms in this application, and details are not described in the following embodiments again.

UE selects, through a cell selection or cell reselection procedure, a suitable cell to camp on. In a process of selecting a cell for camping on, the UE receives a cell selection parameter sent by a network device, and learns of information about the cell, to ensure that the UE can operate normally after camping on the cell, and a transmission rate can meet a rate requirement of a service supported by the UE. The UE measures a signal of the current cell, and when it is determined that measured signal strength and signal quality of the cell meet thresholds indicated by the cell selection parameter sent by the network device, the UE selects the current cell to camp on. Specifically, a cell selection criterion currently defined in NR is:

$$Srxlev > 0 \text{ AND } Squal > 0,$$

where

$$Srxlev = Q_{rxlevmeas} - (Q_{rxlevmin} + Q_{rxlevminoffset}) - P_{compensation} - Qoffset_{temp}.$$

$$Squal = Q_{qualmeas} - (Q_{qualmin} + Q_{qualminoffset}) - Qoffset_{temp}.$$

The parameters are shown in Table 1.

Table 1

| Srxlev | Received level value for cell selection (dB) |
|---|---|
| Squal | Cell selection quality value (dB) |
| Qoffsettemp | Cell temporary offset value |
| $Q_{rxlevmeas}$ | Measured RSRP |
| $Q_{qualmeas}$ | Measured RSRQ |
| $Q_{rxlevmin}$ | RSRP threshold |
| $Q_{qualmin}$ | RSRQ threshold |
| Qrxlevminoffset | Offset value of $Q_{rxlevmin}$ considered in Srxlev evaluation |
| Qqualminoffset | Offset value of $Q_{qualmin}$ considered in Squal evaluation |
| $P_{compensation}$ | Power compensation value |

A network indicates an RSRP threshold and an RSRQ threshold based on the cell selection parameter, and sends the cell selection parameter over an air interface. The terminal device receives the cell selection parameter of the current cell, and determines the RSRP threshold and the RSRQ threshold of the current cell based on the cell selection parameter. The terminal device measures the signal of the current cell, and obtains measured RSRP and measured RSRQ. When the measured RSRP and the measured RSRQ, as well as the RSRP threshold and the RSRQ threshold that are determined based on the cell selection parameter, meet the foregoing formula, the terminal chooses to camp on the current cell.

The measured RSRP and the measured RSRQ reflect communication quality of communication performed by the terminal device in the current cell, and specifically reflect the signal strength and signal quality of the current cell. Generally, a higher service rate indicates higher signal strength and signal quality required for the service. Therefore, when performing cell selection or reselection, a terminal that supports a high service rate, a terminal that is to complete a high-rate service, or a terminal that requires a high service rate needs to select a cell with high signal strength and good signal quality to camp on. If a value of the cell selection parameter sent by the network device is low, signal strength and signal quality required for the high-rate service may be higher than thresholds configured by the network, and in this case, a service rate requirement of the terminal device that supports the high-rate service cannot be met after the terminal device camps on the current cell. In addition, if a value of the cell selection parameter sent by the network device is high, thresholds configured by the network may be higher than signal strength and signal quality required for a low-rate service. In this case, the network is capable of meeting a requirement of the low-rate service. However, for a terminal that is far away from a cell and supports the low-rate service, measured signal strength and/or quality cannot meet an access threshold of the cell. As a result, such user cannot camp on the current cell and cannot perform service transmission. This is equivalent to reducing a coverage area of the cell. In addition, this also increases overheads of cell selection and reselection of the UE and degrades user experience.

The service rate requirement varies between different application scenarios. Particularly, in a machine-to-machine (machine-to-machine, M2M) network, there are many typical application scenarios, and service rate requirements are diversified. For example, a typical service rate in an industrial wireless sensor network scenario is usually lower than or equal to 2 Mbps, and a typical service rate in a video surveillance scenario may exceed 10 Mbps. When the network configures fixed values of the cell selection parameter (for example, the RSRP threshold and the RSRQ threshold), there is a problem that the cell selection parameter cannot match a requirement of the service rate supported by the terminal. Consequently, quality of service of the high-rate service deteriorates, and user experience is degraded. In addition, the terminal supporting the low-rate service may fail to camp on the cell, resulting in increase of overheads of cell selection and reselection and degradation of user experience. The failure to camp on the cell is equivalent to reducing network coverage performance.

In view of this, this application provides a communication method and apparatus, to resolve a problem in a conventional technology that a cell selection parameter cannot match a requirement of a service rate supported by a terminal. A network device determines and sends one or more groups of values of a cell selection parameter. There is an association relationship between the cell selection parameter and service information. According to the method, a terminal can select a suitable cell selection parameter based on a supported service rate or a required service rate to perform cell selection or cell reselection. This can resolve the problem in the conventional technology that the cell selection parameter cannot match the requirement of the service rate supported by the terminal, thereby improving communication quality, quality of service of a service, and user experience. This may also resolve a problem of reduced network coverage performance.

To make a person skilled in the art understand the technical solutions in embodiments of the present invention better, the following clearly and completely describes the technical solutions in embodiments of the present invention with reference to the accompanying drawings in embodiments of the present invention. It is clear that the described embodiments are merely some rather than all of embodiments of the present invention. All other embodiments obtained by a person of ordinary skill in the art based on embodiments of the present invention without creative efforts shall fall within the protection scope of the present invention.

FIG. 2 is a diagram of an example of a communication method according to an embodiment of this application. The method 200 may include S210 to S230. The method may be performed separately by a terminal device and a network device, or may be performed separately by a chip in the terminal device and a chip in the network device. It should be understood that FIG. 2 shows steps or operations of the communication method. However, these steps or operations are merely examples. In embodiments of this application, other operations or variations of the operations in FIG. 2 may be further performed, or appropriate exchanging between steps may be performed.

S210: The network device determines one or more groups of values of a cell selection parameter. There is an association relationship between the one or more groups of values of the cell selection parameter and one or more pieces of service information.

It should be understood that in this embodiment of this application, the one or more groups of values of the cell selection parameter may be used for cell selection, or may be used for cell reselection. The cell selection parameter may be a cell selection/reselection parameter, a cell access parameter, or the like. Names of the cell selection parameter are not limited in this application.

The following separately describes the cell selection parameter, the service information, and the association relationship.

(1) Cell selection parameter

The one or more groups of values of the cell selection parameter are used for reflecting a required signal strength or signal quality level of a cell.

In an implementation, a group of values of the cell selection parameter indicates at least one of an RSRP threshold or an RSRQ threshold. It may be understood that one or more groups in this embodiment of this application are used for clear expression. This does not imply a behavior or a result of grouping, or exclude a behavior or a result of grouping. It may be understood that a group of values in this embodiment of this application means one or more values. The group of values in this embodiment of this application may include only one value, or the group of values in this embodiment of this application may include a plurality of values. Both cases fall within the protection scope of the claims of this application. Specifically, a group of values of the cell selection parameter may be one of the following implementations:

Only the RSRP threshold is included.

Only the RSRQ threshold is included.

The RSRP threshold is included, and another parameter is not limited in this application.

The RSRQ threshold is included, and another parameter is not limited in this application.

Only the RSRP threshold and the RSRQ threshold are included.

The RSRP threshold and the RSRQ threshold are included, and another parameter is not limited in this application.

A parameter associated with a required minimum signal strength or signal quality level of a cell is included. For example, the parameter may be the parameter in Table 1, or may be an RSRP threshold offset value, an RSRQ threshold offset value, or the like. Another parameter is not limited in this application.

Correspondingly, each group of values in a plurality of groups of values of the cell selection parameter may be one of the foregoing listed implementations. It may be understood that two different groups of values in the plurality of groups of values of the cell selection parameter may be a combination of different implementations in the foregoing listed implementations, or may be a same implementation in the foregoing listed implementations. For example, in the plurality of groups of values of the cell selection parameter, a first group of values includes only the RSRP threshold, a second group of values includes only the RSRP threshold and the RSRQ threshold, and a third group of values includes only the RSRP threshold. For the one or more groups of values of the cell selection parameter, reference may be further made to an example of the association relationship in this application.

Optionally, the cell selection parameter may directly indicate a value of the RSRP threshold; or the cell selection parameter may indicate a value associated with the RSRP threshold, where an association between the value indicated by the cell selection parameter and the RSRP threshold may meet a predefined rule; or the cell selection parameter may indicate the RSRP threshold offset value, where the RSRP threshold may be determined based on a given RSRP threshold and the offset value indicated by the cell selection parameter. The following examples are separately used for description. It may be understood that an indication manner of the cell selection parameter may be any combination of the foregoing indication manners.

Manner 1: The cell selection parameter may directly indicate the value of the RSRP threshold. For example, if a value of the cell selection parameter is -80 dBm or -80, a receive end, for example, the terminal device, may determine, based on the value of the cell selection parameter configured by the network device, that the RSRP threshold is -80 dBm.

Manner 2: The cell selection parameter may indicate the value associated with the RSRP threshold. For example, if a value of the cell selection parameter is -40 dBm or -40, where the predefined rule is that the RSRP threshold is twice the value of the cell selection parameter, a receive end, for example, the terminal device, may determine, based on the value of the cell selection parameter according to the predefined rule, that the RSRP threshold is -80 dBm. In this way, a range of indicated values can be increased, and indication overheads can be reduced.

Manner 3: The cell selection parameter may indicate the RSRP threshold offset value. For example, if a value of the cell selection parameter is -3 dBm or -3, and the given RSRP threshold is -80 dBm, a receive end, for example, the terminal device, may determine, based on the given RSRP threshold and the value of the cell selection parameter, that the RSRP threshold is -83 dBm. The given RSRP threshold may be indicated in Manner 1 or Manner 2, or may be predefined. In Manner 3, a range of indicated values can be increased, and indication overheads can be reduced.

For an indication manner of the RSRQ threshold, refer to the foregoing indication manner of the RSRP threshold. Details are not described in this embodiment of this application again. It may be understood that the indication manner of the RSRP threshold may be the same as or different from the indication manner of the RSRQ threshold, and the indication manners of the RSRP threshold and the RSRQ threshold may be any combination of the foregoing indication manners.

It should be understood that the foregoing predefined configuration rule may alternatively be preconfigured. Manner 2 is used as an example. A calculation rule is that the RSRP threshold is twice the value of the cell selection parameter, that is, a step is 2. In this case, after the step is determined, the network device may predefine, by using signaling or the like, the step as one of a plurality of candidate parameters such as 0.5, 1, 1.5, 2, or 3, that is, the value is the step being 2. In this way, a value range of RSRP can be flexibly configured. A smaller step indicates a more accurate RSRP threshold, and a more accurate result of determining, by the terminal device based on information such as a service rate, whether to perform selection/reselection. A larger step indicates smaller indication signaling overheads and a larger value range of the RSRP threshold.

(2) Service information

In an implementation, the one or more pieces of service information may be used for reflecting quality of service (Quality of Service, QoS) information of a service.

In an implementation, the service information includes service rate information, or the service information includes a service type. In another implementation, the service information includes another parameter that can reflect QoS of the service.

Specifically, the service information may be a value, or may be a value range, or may be non-value information. The service rate is used as an example. The service information may be 2 Mbps or 10 Mbps, or the service information may be 2 to 6 Mbps or 6 to 10 Mbps, or the service information may be predefined as a high service rate or a low service rate. In a specific configuration process, the service information may be indicated by using an identifier, a value, a value range, or the like.

Specifically, the service information may be service types classified based on a session/real-time service, an interactive service, or a streaming media service, or may be service types classified based on transmission content such as voice, data, and video, or may be service types further classified based on a more specific service such as video call, remote sensing survey, web page browsing, email, static picture transmission, and high-quality multimedia video. Alternatively, the service information may be a service type A, a service type B, or the like that is classified based on a service rate range, or the service information may be a service type that is classified based on the another parameter that can reflect the QoS of the service. The service rate is used as an example. A service with a service rate of 2 to 6 Mbps may be classified as a service type 1, and a service with a service rate of 6 to 10 Mbps may be classified as a service type 2. In still another embodiment, a service type may be determined based on an application (APP) identifier. There are a plurality of classification manners of the service type, and the classification manners are not limited to the classification manners listed in this embodiment of this application. For ease of description, the service type is uniformly described as a service type 1, a service type 2, a service type 3, or the like in the following.

Optionally, the one or more pieces of service information are determined by a core network (core network), or the one or more pieces of service information are determined by a radio access network (radio access network, RAN).

In a specific implementation, the core network determines several service types based on all or some services, or the core network defines a plurality of service rate ranges, and sends such information to the RAN. The RAN matches a corresponding cell selection parameter for each service type or service rate range based on the received one or more service types or service rate ranges, determines an association relationship, and sends the association relationship to the terminal device.

In another specific implementation, the RAN determines several service types based on all or some services, or the RAN defines a plurality of service rate ranges, matches a corresponding cell selection parameter for each service type or service rate range, determines an association relationship, and sends the association relationship to the terminal device.

(3) Association relationship

In an implementation, there is a mapping relationship between the one or more groups of values of the cell selection parameter and the one or more pieces of service information. Further, the mapping relationship may be a one-to-one correspondence. It may be understood that the mapping relationship may alternatively be a combination of a many-to-one relationship, a one-to-many relationship, a many-to-many relationship, and the foregoing correspondence.

The following examples are used for describing the association relationship. It may be understood that the association relationship is not limited to implementations in the following examples, and may further include a combination of other possible correspondences. In addition, the association relationship may alternatively include only association relationships shown in some rows in the following tables. It should be noted that an end value of the service rate range may be shown in the tables, or may be included or not included in the corresponding service rate range.

Example 1: There is a correspondence shown in Table 2 between a plurality of service rate ranges and a plurality of groups of RSRP thresholds and RSRQ thresholds. In this example, the service rate range is service information, the RSRP threshold and the RSRQ threshold are cell selection parameters, and the association relationship is a one-to-one correspondence. In these examples of this application, Data rate_2 may be the same as or different from Data rate_3, Data rate_4 may be the same as or different from Data rate_5, and so on. When different service rate ranges do not overlap, the terminal device may determine, based on the service rate range, an RSRP threshold and an RSRQ threshold that are associated with each other. In another embodiment, these service rate ranges may alternatively overlap. In this case, the terminal device may determine one of a plurality of groups of cell selection parameters that meet the service rate ranges. In this way, flexibility of the terminal device can be improved.

Table 2

| Service rate range | RSRP threshold and RSRQ threshold |
|---|---|
| (Data rate_1, Data rate_2] | RSRP threshold 1 and RSRQ threshold 1 |
| (Data rate_3, Data rate_4] | RSRP threshold 2 and RSRQ threshold 2 |
| (Data rate_5, Data rate_6] | RSRP threshold 3 and RSRQ threshold 3 |
| (Data rate_7, Data rate_8] | RSRP threshold 4 and RSRQ threshold 4 |

It should be understood that these examples may be further combined with the foregoing indication manners, and an indication manner of the service information and the indication manner of the cell selection parameter may be combined in any way. For example, the service rate range in Example 1 may be directly indicated by a network, or may be indirectly indicated by the network by indicating the end value of the value range. In Example 1, a group of cell selection parameters is an RSRP threshold and an RSRQ threshold. The RSRP threshold may be indicated in one or more of the foregoing Manner 1 to Manner 3, and the RSRQ threshold may also be indicated in one or more of the foregoing Manner 1 to Manner 3. The indication manner of the RSRP threshold may be the same as or different from the indication manner of the RSRQ threshold, and the indication manners of the RSRP threshold and the RSRQ threshold may be any combination of the foregoing indication manners.

Example 2: There is a correspondence shown in Table 3 between a plurality of service rate ranges and one group of an RSRP threshold and an RSRQ threshold. In this example, the service rate range is service information, the RSRP threshold and the RSRQ threshold are cell selection parameters, and the association relationship is a many-to-one relationship. Alternatively, the correspondence may be a one-to-many relationship. To be specific, one service rate range corresponds to a plurality of groups of RSRP thresholds and RSRQ thresholds.

Table 3

| Service rate range | RSRP threshold and RSRQ threshold |
|---|---|
| (Data rate_1, Data rate_2] | RSRP threshold 1 and RSRQ threshold 1 |
| (Data rate_3, Data rate_4] | |
| (Data rate_5, Data rate_6] | RSRP threshold 2 and RSRQ threshold 2 |
| (Data rate_7, Data rate_8] | |

Example 3: There is a correspondence shown in Table 4 between a plurality of service rate ranges and a plurality of groups of RSRP thresholds and RSRQ thresholds. In this example, the service rate range is service information, the RSRP threshold and the RSRQ threshold are cell selection parameters, and the association relationship is a combination of a many-to-one relationship, a one-to-many relationship, and a one-to-one relationship.

Table 4

| Service rate range | RSRP threshold and RSRQ threshold |
|---|---|
| (Data rate_1, Data rate_2] | RSRP threshold 1 and RSRQ threshold 1 |
| | RSRP threshold 2 and RSRQ threshold 2 |
| (Data rate_3, Data rate_4] | RSRP threshold 3 and RSRQ threshold 3 |
| (Data rate_5, Data rate_6] | |
| (Data rate_7, Data rate_8] | RSRP threshold 4 and RSRQ threshold 4 |

Example 4: There is a correspondence shown in Table 5 between one service rate range and one group of an RSRP threshold and an RSRQ threshold. In this example, the service rate range is service information, the RSRP threshold and the RSRQ threshold are cell selection parameters, and the association relationship is a one-to-one correspondence.

Table 5

| Service rate range | RSRP threshold and RSRQ threshold |
|---|---|
| (Data rate_1, Data rate_2] | RSRP threshold 1 and RSRQ threshold 1 |

It may be understood that there is not necessarily a binding relationship between an implementation of the cell selection parameter, an implementation of the service information, and an implementation of the association relationship. In this embodiment of this application, possible implementations of the cell selection parameter, the service information, and the association relationship may be combined in any way. It may be understood that, a replacement of the possible implementation of the cell selection parameter and a replacement of the possible implementation of the service information in the foregoing examples both fall within the protection scope of the present invention.

The following examples are used for describing a plurality of implementations of the cell selection parameter and the service information. It may be understood that the possible implementations of the cell selection parameter and the service information are not limited to implementations in the following examples, and may further include the implementations described in the foregoing embodiment of this application and other possible implementations. For brevity, the following uses a one-to-one correspondence as an example for description.

Example 1: There is a correspondence shown in Table 6 between a plurality of service rate ranges and a plurality of RSRP thresholds. In this example, the service rate range is service information, and the RSRP threshold is a cell selection parameter.

Table 6

| Service rate range | RSRP threshold |
|---|---|
| (Data rate_1, Data rate_2] | RSRP threshold 1 |
| (Data rate_3, Data rate_4] | RSRP threshold 2 |
| ... | ... |
| (Data rate_M, Data rate_N] | RSRP threshold X |

Example 2: There is a correspondence shown in Table 7 between a plurality of service types and a plurality of RSRP thresholds. In this example, the service type is service information, and the RSRP threshold is a cell selection parameter.

Table 7

| Service type | RSRP threshold |
|---|---|
| 1 | RSRP threshold 1 |
| 2 | RSRP threshold 2 |
| ... | ... |
| X | RSRP threshold X |

Example 3: There is a correspondence shown in Table 8 between a plurality of service types and a plurality of groups of RSRP thresholds and RSRQ thresholds. In this example, the service type is service information, and the RSRP threshold and the RSRQ threshold are cell selection parameters.

Table 8

| Service type | RSRP threshold and RSRQ threshold |
|---|---|
| 1 | RSRP threshold 1 and RSRQ threshold 1 |
| 2 | RSRP threshold 2 and RSRQ threshold 2 |
| ... | ... |
| X | RSRP threshold X and RSRQ threshold X |

There is an implementation in which an association relationship between a plurality of cell selection parameters and service information is separately specified.
Example 1: There is a correspondence shown in Table 9-1 between a plurality of service types and a plurality of RSRP thresholds, there is a correspondence shown in Table 9-2 between a plurality of service types and a plurality of RSRQ thresholds, and the correspondences shown in Table 9-1 and Table 9-2 are both one-to-one correspondences. In this example, the service type is service information. In Table 9-1, the RSRP threshold is a cell selection parameter. In Table 9-2, the RSRQ threshold is a cell selection parameter.

Table 9-1

| Service type | RSRP threshold |
|---|---|
| 1 | RSRP threshold 1 |
| 2 | RSRP threshold 2 |
| ... | ... |
| $X_1$ | RSRP threshold $X_1$ |

Table 9-2

| Service type | RSRQ threshold |
|---|---|
| 1 | RSRQ threshold 1 |
| 2 | RSRQ threshold 2 |
| ... | ... |
| $X_2$ | RSRQ threshold $X_2$ |

Example 2: There is a correspondence shown in Table 10-1 between a plurality of service rate ranges and a plurality of RSRP thresholds, and the correspondence is a one-to-one correspondence. There is a correspondence shown in Table 10-2 between a plurality of service types and one RSRQ threshold, and the correspondence is a many-to-one relationship. In this example, in Table 10-1, the service rate range is service information, and the RSRP threshold is a cell selection parameter. In Table 10-2, the service type is service information, and the RSRQ threshold is a cell selection parameter.

Table 10-1

| Service rate range | RSRP threshold |
|---|---|
| (Data rate_1, Data rate_2] | RSRP threshold 1 |
| (Data rate_3, Data rate_4] | RSRP threshold 2 |
| ... | ... |
| (Data rate_M, Data rate_N] | RSRP threshold $X_1$ |

Table 10-2

| Service type | RSRQ threshold |
|---|---|
| 1 | RSRQ threshold |
| 2 | |
| ... | |
| $X_2$ | |

It should be understood that such implementations are a plurality of applications of an invention solution of this application. For example, the association relationship specified in Table 9-1 in the foregoing example is an application of the invention solution of this application, and the association relationships specified in Table 9-2, Table 10-2, and Table 10-2 in the foregoing examples are all applications of the invention solution of this application. Such implementations fall within the protection scope of the present invention, and such implementations fall within the protection scope of the claims of this application.

S220: The network device sends the one or more groups of values of the cell selection parameter.

Optionally, the network device may send the one or more groups of values of the cell selection parameter by using a broadcast signal, for example, a MIB, a SIB1, other system information (other system information, OSI), or a MAC control element (MAC control element, MAC CE). Alternatively, the network device may send the one or more groups of values of the cell selection parameter by using UE-specific (UE-specific) signaling, for example, RRC signaling, a MAC CE, or downlink control information (downlink control information, DCI).

Optionally, the association relationship is predefined, or the association relationship is sent by the network device.

In an implementation, the association relationship may be learned by the terminal device in a predefined manner. For example, the association relationship is defined by the network device and the terminal device according to a same preset rule.

In an implementation, the association relationship is sent by the network device in step S220. For a signal carried in the sent content, refer to the foregoing content. Details are not described herein again.

In an implementation, the association relationship is sent by the network device in step S240 other than step S220. In an implementation, the association relationship may be sent by using the broadcast signal or a multicast signal. Step S240 is not shown in FIG. 2. It may be understood that step S240 may be performed before step S220, or may be performed after step S220, or may be performed simultaneously with step S220. For a signal carried in the content sent in step S220 and step S240, refer to the foregoing content. Details are not described herein again.

S230: The terminal device receives the one or more groups of values of the cell selection parameter, and performs cell selection based on the one or more groups of values of the cell selection parameter.

Specifically, the terminal device receives the one or more groups of values of the cell selection parameter, and determines the association relationship. For details, refer to the descriptions in the foregoing embodiment of this application. Details are not described herein again. Accordingly, the terminal device may receive, by using the broadcast signal or the terminal-specific signaling, the one or more groups of values of the cell selection parameter sent by the network device. For details, refer to the foregoing descriptions. Details are not described herein again in this application.

The following describes in detail how the terminal device performs cell selection based on the one or more groups of values of the cell selection parameter. A specific method may include: The terminal device determines a first parameter based on service information of one or more supported services and the association relationship, where the first parameter is a group of values in the one or more groups of values of the cell selection parameter; and the terminal device performs cell selection based on the first parameter. Optionally, the terminal device determines the first parameter based on service information of a specific service in the one or more supported services. Optionally, the terminal device determines the first parameter based on service information of a service with a highest quality of service requirement in the one or more supported services.

The first parameter is a group of values in the one or more groups of values of the cell selection parameter. For example, one RSRP threshold and one RSRQ threshold are the first parameters. One RSRP threshold may be one of one or more candidate RSRP thresholds in the cell selection parameters, and one RSRQ threshold may be one of one or more candidate RSRQ thresholds in the cell selection parameters.

It should be understood that in this application, that the terminal device determines the first parameter based on the service information of the one or more supported services and the association relationship is merely an example. Alternatively, the terminal device may determine one piece of service information, and then determine the first parameter based on the service information and the association relationship. The determined service information may be service information of a service that currently needs to be executed, or may be preset service information of a service, or the like. Alternatively, the terminal device may determine one service rate, and then determine the first parameter based on the service rate and the association relationship. The service rate may be a service rate of a service that currently needs to be executed, or may be a preset service rate of a service, or the like. In this application, the service supported by the terminal device may be all or some services supported by the terminal device. It should be understood that a service that is being executed or to be completed by the terminal device is also a service supported by the terminal device, and one or more specific services are also one or more services supported by the terminal device. Correspondingly, a service requirement of the one or more specific services, for example, a service rate requirement, is also a service requirement of the service supported by the terminal device.

It should be understood that in this embodiment of this application, the one or more groups of values of the cell selection parameter may be used for cell selection, or may be used for cell reselection. The terminal device may perform cell selection or cell reselection based on the first parameter. It should be understood that a process in which the terminal device performs cell selection based on the first parameter may be performed by using a determining criterion in a conventional technology, or may be performed by using another criterion. This is not limited in this embodiment of this application. It should be understood that the terminal device may perform another operation based on the cell selection parameter.

In a possible implementation, the service rate range is service information, and the RSRP threshold is a cell selection parameter. The terminal device determines a first parameter based on a service rate of one or more supported services and the association relationship, where the first parameter is one of one or more RSRP thresholds in the cell selection parameter; and the terminal device performs cell selection based on the first parameter. Optionally, the terminal device determines the first parameter based on a service rate of a specific service in the one or more supported services. Optionally, the terminal device determines the first parameter based on a service rate of a service with a highest service rate in one or more supported services, currently supported services, to-be-executed services, or specific services.

For example, the terminal device receives a cell selection parameter of a current cell, and determines, based on the cell selection parameter, that there is an association relationship shown in Table 11 between an RSRP threshold of the current cell and the service rate range. If service rates of two services supported by the terminal device are 3 Mbps and 8 Mbps respectively, the terminal device may determine the first parameter based on one of the two services supported by the terminal device. A possible manner is that the terminal device determines the first parameter based on a service rate of a service with a higher service rate in the two services. In this example, the terminal device determines, based on 8 Mbps, that the first parameter is -80 dBm. The terminal device measures a signal of the current cell, and obtains measured RSRP of -85 dBm. It is assumed that the terminal can choose to camp on the current cell only when the measured RSRP is greater than the first parameter. In this case, in this example, the terminal device cannot choose to camp on the current cell.

Table 11

| Service rate range | RSRP threshold |
|---|---|
| (0 Mbps, 5 Mbps] | -90 dBm |
| (5 Mbps, 10 Mbps] | -80 dBm |

In another possible implementation, the service type is service information, and the RSRP threshold is a cell selection parameter. The terminal device determines a first parameter based on a service type of a supported service and the association relationship, where the first parameter is one of one or more RSRP thresholds in the cell selection parameter; and the terminal device performs cell selection based on the first parameter.

For example, a terminal device A and a terminal device B receive a cell selection parameter of a current cell, and determine, based on the cell selection parameter, that there is an association relationship shown in Table 12 between an RSRP threshold of the current cell and the service type. If a service type of a service supported by the terminal device A is 2, the terminal device A determines, based on the service type 2 supported by the terminal device A, that the first parameter is -80 dBm. If a service type of a service supported by the terminal device B is 1, the terminal device B determines, based on the service type 1 supported by the terminal device B, that the first parameter is -90 dBm. The terminal device A measures a signal of the current cell, and obtains measured RSRP of -83 dBm. The terminal device B measures the signal of the current cell, and obtains measured RSRP of -85 dBm. It is assumed that the terminal can choose to camp on the current cell only when the measured RSRP is greater than the first parameter. In this case, in this example, the terminal device A cannot choose to camp on the current cell, and the terminal device B can choose to camp on the current cell.

Table 12

| Service type | RSRP threshold |
|---|---|
| 1 | -90 dBm |
| 2 | -80 dBm |

In the foregoing example, the terminal device A may continue to perform cell search. For example, if there is another cell B in a current network, a service rate level supported by the cell B and a corresponding cell access threshold are the same as those of a cell A, and RSRP obtained by the terminal device A by measuring a signal of the cell B is -75 dBm, the terminal device A may select the cell B to camp on, and certainly may continue to perform cell search.

In this embodiment of this application, the cell selection parameter is associated with the service information, so that a terminal that supports different services can select, based on the supported services, a suitable cell to camp on. This resolves a problem in a conventional technology that a cell selection parameter cannot match a requirement of a service rate supported by a terminal, thereby improving communication quality and quality of service of the service. This may also resolve a problem of reduced network coverage performance.

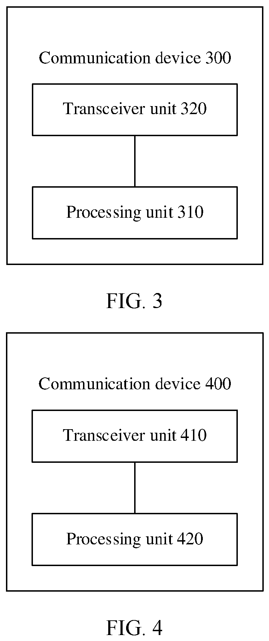

An embodiment of this application provides a communication device 300. The communication device may be used in the network device in the method embodiment in FIG. 2, or may be a component, for example, a chip, for implementing the method in the embodiment in FIG. 2. FIG. 3 is a block diagram of a communication device 300 according to an embodiment of this application. The communication device 300 includes:

a processing unit 310, configured to determine one or more groups of values of a cell selection parameter, where there is an association relationship between the one or more groups of values of the cell selection parameter and one or more pieces of service information; and
a transceiver unit 320, configured to send the one or more groups of values of the cell selection parameter.

In this embodiment of this application, the transceiver unit may be a sending unit when performing a sending step, and may be a receiving unit when performing a receiving step. In addition, the transceiver unit may be replaced with a transceiver, the sending unit may be replaced with a transmitter, and the receiving unit may be replaced with a receiver.

Optionally, the association relationship is predefined, or the transceiver unit 320 is further configured to send the association relationship.

Optionally, the one or more groups of values of the cell selection parameter are in one-to-one correspondence with the one or more pieces of service information.

Optionally, the transceiver unit 320 is further configured to send the one or more groups of values of the cell selection parameter by using a broadcast signal; or the transceiver unit 320 is further configured to send the one or more groups of values of the cell selection parameter and the association relationship by using a broadcast signal.

Optionally, the one or more groups of values of the cell selection parameter are used for cell selection or cell reselection.

Optionally, a group of values of the cell selection parameter indicates at least one of required minimum received reference signal received power RSRP for cell selection or required minimum received reference signal received quality RSRQ for cell selection.

Optionally, the service information includes service rate information, or the service information includes a service type.

Optionally, the one or more pieces of service information are determined by a core network, or the one or more pieces of service information are determined by a radio access network RAN.

It should be understood that the communication device 300 shown in FIG. 3 can implement processes related to the network device in the foregoing method embodiment. Operations and/or functions of modules in the communication device 300 are respectively intended to implement corresponding procedures in the foregoing method embodiment. For details, refer to the descriptions in the foregoing method embodiment. To avoid repetition, detailed descriptions are properly omitted herein. For explanations and beneficial effects of related content of any one of the apparatuses provided above, refer to the corresponding method embodiment provided above. Details are not described herein again.

An embodiment of this application provides another communication device 400. The communication device may be used in the terminal device in the method embodiment in FIG. 2, or may be a component, for example, a chip, for implementing the method in the embodiment in FIG. 2. FIG. 4 is a block diagram of a communication device 400 according to an embodiment of this application. The communication device 400 includes:

a transceiver unit 410, configured to receive one or more groups of values of a cell selection parameter sent by a network device, where there is an association relationship between the one or more groups of values of the cell selection parameter and one or more pieces of service information; and
a processing unit 420, configured to perform cell selection based on the one or more groups of values of the cell selection parameter.

Optionally, the service information includes a service rate, and the method further includes: The processing unit 420 is further configured to determine a first parameter based on a service rate of one or more services supported by the terminal device and the association relationship, where the first parameter is a group of values in the one or more groups of values of the cell selection parameter; and the processing unit 420 is further configured to perform cell selection based on the first parameter.

Optionally, the processing unit 420 is further configured to determine the first parameter based on a service rate of a service with a highest service rate in the one or more services supported by the terminal device.

Optionally, the service information includes a service type, and the method further includes: The processing unit 420 is further configured to determine a first parameter based on a service type of one or more services supported by the terminal device and the association relationship, where the first parameter is a group of values in the one or more groups of values of the cell selection parameter; and the processing unit 420 is further configured to perform cell selection based on the first parameter.

Optionally, the processing unit 420 is further configured to determine the first parameter based on a service type of a service with a highest service rate in the one or more services supported by the terminal device.

Optionally, the association relationship is predefined, or the transceiver unit 410 is further configured to receive the association relationship sent by the network device.

Optionally, the one or more groups of values of the cell selection parameter are in one-to-one correspondence with the one or more pieces of service information.

Optionally, the transceiver unit 410 is further configured to receive the one or more groups of values of the cell selection parameter that are sent by the network device by using a broadcast signal; or the transceiver unit 410 is further configured to receive the one or more groups of values of the cell selection parameter and the association relationship that are sent by the network device by using a broadcast signal.

Optionally, the one or more groups of values of the cell selection parameter are used for cell selection or cell reselection; and the processing unit 420 is further configured to perform cell selection or cell reselection based on the first parameter.

Optionally, a group of values of the cell selection parameter indicates at least one of required minimum received reference signal received power RSRP for cell selection or required minimum received reference signal received quality RSRQ for cell selection.

Optionally, the one or more pieces of service information are determined by a core network, or the one or more pieces of service information are determined by a radio access network RAN.

It should be understood that the communication device 400 shown in FIG. 4 can implement processes related to the terminal device in the foregoing method embodiment. Operations and/or functions of modules in the communication device 400 are respectively intended to implement corresponding procedures in the foregoing method embodiment. For details, refer to the descriptions in the foregoing method embodiment. To avoid repetition, detailed descriptions are properly omitted herein. For explanations and beneficial effects of related content of any one of the apparatuses provided above, refer to the corresponding method embodiment provided above. Details are not described herein again.

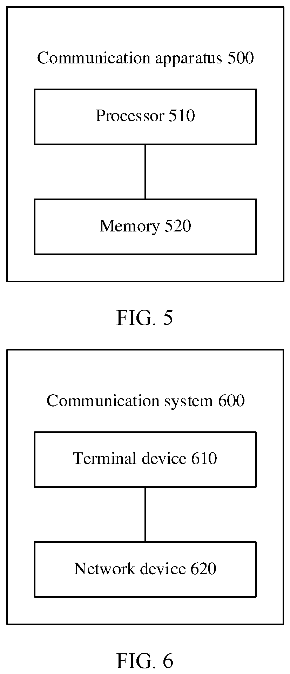

An embodiment of this application provides a communication apparatus 500. FIG. 5 is a block diagram of another communication apparatus according to an embodiment of this application. The communication apparatus 500 includes a processor 510. The processor 510 is coupled to at least one memory 520. The processor 510 is configured to read a computer program stored in the at least one memory 520, to perform the method in any possible implementation of embodiments of this application.

The processor 510 may be an integrated circuit chip and has a capability of processing a signal. During implementation, steps in the foregoing method embodiments may be implemented by using a hardware integrated logic circuit in a processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware of the processor.

The memory 520 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through illustrative but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

An embodiment of this application provides a communication chip. The communication chip includes a processor and a communication interface. The processor is configured to read instructions or a computer program, to perform the method in embodiments of this application.

An embodiment of this application provides a communication system 600 that includes a terminal device 610 and a network device 620 in the communication method provided in embodiments of this application. FIG. 6 is a block diagram of a communication system 600 according to an embodiment of this application.

An embodiment of this application further provides a computer-readable storage medium. The computer-readable storage medium stores a computer program for implementing the method in embodiments of this application. When the computer program is run on a computer, the computer is caused to implement the method in the foregoing method embodiments.

An embodiment of this application further provides a computer program product. When the computer program product runs on a computer, the computer is caused to perform the method in embodiments of this application.

It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

A person skilled in the art may understand that various numbers such as first and second in this application are merely used for differentiation for ease of description, and are not used to limit the scope of embodiments of this application. A specific value of a number (which may also be referred to as an index), a specific value of a quantity, and a position in this application are merely used as examples, but are not unique representation forms, and are not used to limit the scope of embodiments of this application. Various numbers such as first and second in this application are merely used for differentiation for ease of description, and are not used to limit the scope of embodiments of this application.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

A person of ordinary skill in the art may be aware that, in combination with the examples described in embodiments disclosed in this specification, units, and algorithm steps may be implemented by electronic hardware or a combination of computer software and electronic hardware. Whether such functions are performed by hardware or software depends on particular applications and design constraint conditions of the technical solutions. A person skilled in the art may use different methods to implement the described functions for each specific application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein.

In the several embodiments provided in this application, it should be understood that the disclosed system, apparatus, and method may be implemented in other manners. For example, the apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in the form of a software product. The computer software product is stored in a storage medium, and includes a plurality of instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining, by a network device, one or more groups of values of a cell selection parameter, wherein there is an association relationship between the one or more groups of values of the cell selection parameter and one or more pieces of service information; and
   sending, by the network device, the one or more groups of values of the cell selection parameter.

2. The method according to claim 1, wherein the association relationship is predefined, or the association relationship is sent by the network device.

3. The method according to claim 1 or 2, wherein the one or more groups of values of the cell selection parameter are in one-to-one correspondence with the one or more pieces of service information.

4. The method according to any one of claims 1 to 3, wherein the network device sends the one or more groups of values of the cell selection parameter by using a broadcast signal; or the network device sends the one or more groups of values of the cell selection parameter and the association relationship by using a broadcast signal.

5. The method according to any one of claims 1 to 4, wherein the one or more groups of values of the cell selection parameter are used for cell selection or cell reselection.

6. The method according to any one of claims 1 to 5, wherein a group of values of the cell selection parameter indicates at least one of required minimum reference signal received power RSRP for cell selection or required minimum reference signal received quality RSRQ for cell selection.

7. The method according to any one of claims 1 to 6, wherein the service information comprises service rate information, or the service information comprises a service type.

8. The method according to any one of claims 1 to 7, wherein the one or more pieces of service information are determined by a core network, or the one or more pieces of service information are determined by a radio access network RAN.

9. A communication method, comprising:

   receiving, by a terminal device, one or more groups of values of a cell selection parameter sent by a network device, wherein there is an association relationship between the one or more groups of values of the cell selection parameter and one or more pieces of service information; and
   performing cell selection based on the one or more groups of values of the cell selection parameter.

10. The method according to claim 9, wherein the service information comprises a service rate, and the method further comprises:

   determining, by the terminal device, a first parameter based on a service rate of one or more supported services and the association relationship, wherein
   the first parameter is a group of values in the one or more groups of values of the cell selection parameter; and
   performing, by the terminal device, cell selection based on the first parameter.

11. The method according to claim 9 or 10, wherein the terminal device determines the first parameter based on a service rate of a service with a highest service rate in the one or more supported services.

12. The method according to claim 9, wherein the service information comprises a service type, and the method further comprises:

   determining, by the terminal device, a first parameter based on a service type of one or more supported services and the association relationship, wherein
   the first parameter is a group of values in the one or more groups of values of the cell selection parameter; and
   performing, by the terminal device, cell selection based on the first parameter.

13. The method according to claim 9 or 12, wherein the terminal device determines the first parameter based on a service type of a service with a highest service rate in the one or more supported services.

14. The method according to any one of claims 9 to 13, wherein the association relationship is predefined, or the association relationship is sent by the network device.

15. The method according to any one of claims 9 to 14, wherein the one or more groups of values of the cell selection parameter are in one-to-one correspondence with the one or more pieces of service information.

16. The method according to any one of claims 9 to 15, wherein the terminal device receives the one or more groups of values of the cell selection parameter that are sent by the network device by using a broadcast signal; or the terminal device receives the one or more groups of values of the cell selection parameter and the association relationship that are sent by the network device by using a broadcast signal.

17. The method according to any one of claims 9 to 16,
wherein the one or more groups of values of the cell selection parameter are used for cell selection or cell reselection; and the method comprises:
performing, by the terminal device, cell selection or cell reselection based on the first parameter.

18. The method according to any one of claims 9 to 17, wherein a group of values of the cell selection parameter indicates at least one of required minimum reference signal received power RSRP for cell selection or required minimum reference signal received quality RSRQ for cell selection.

19. The method according to any one of claims 9 to 18, wherein the one or more pieces of service information are determined by a core network, or the one or more pieces of service information are determined by a radio access network RAN.

20. A network device, comprising:

a processing unit, configured to determine one or more groups of values of a cell selection parameter, wherein there is an association relationship between the one or more groups of values of the cell selection parameter and one or more pieces of service information; and
a transceiver unit, configured to send the one or more groups of values of the cell selection parameter.

21. The method according to claim 20, wherein the association relationship is predefined, or the transceiver unit is further configured to send the association relationship.

22. The method according to claim 20 or 21, wherein the one or more groups of values of the cell selection parameter are in one-to-one correspondence with the one or more pieces of service information.

23. The method according to any one of claims 20 to 22, wherein the transceiver unit is further configured to send the one or more groups of values of the cell selection parameter by using a broadcast signal; or the transceiver unit is further configured to send the one or more groups of values of the cell selection parameter and the association relationship by using a broadcast signal.

24. The method according to any one of claims 20 to 23, wherein the one or more groups of values of the cell selection parameter are used for cell selection or cell reselection.

25. The method according to any one of claims 20 to 24, wherein a group of values of the cell selection parameter indicates at least one of required minimum received reference signal received power RSRP for cell selection or required minimum received reference signal received quality RSRQ for cell selection.

26. The method according to any one of claims 20 to 25, wherein the service information comprises service rate information, or the service information comprises a service type.

27. The method according to any one of claims 20 to 26, wherein the one or more pieces of service information are determined by a core network, or the one or more pieces of service information are determined by a radio access network RAN.

28. A terminal device, comprising:

a transceiver unit, configured to receive one or more groups of values of a cell selection parameter sent by a network device, wherein there is an association relationship between the one or more groups of values of the cell selection parameter and one or more pieces of service information; and
a processing unit, configured to perform cell selection based on the one or more groups of values of the cell selection parameter.

29. The method according to claim 28, wherein the service information comprises a service rate, and the method further comprises:

the processing unit is further configured to determine a first parameter based on a service rate of one or more services supported by the terminal device and the association relationship, wherein

the first parameter is a group of values in the one or more groups of values of the cell selection parameter; and

the processing unit is further configured to perform cell selection based on the first parameter.

30. The method according to claim 28 or 29, wherein the processing unit is further configured to determine the first parameter based on a service rate of a service with a highest service rate in the one or more services supported by the terminal device.

31. The method according to claim 28, wherein the service information comprises a service type, and the method further comprises:

the processing unit is further configured to determine a first parameter based on a service type of one or more services supported by the terminal device and the association relationship, wherein

the first parameter is a group of values in the one or more groups of values of the cell selection parameter; and

the processing unit is further configured to perform cell selection based on the first parameter.

32. The method according to claim 28 or 31, wherein the processing unit is further configured to determine the first parameter based on a service type of a service with a highest service rate in the one or more services supported by the terminal device.

33. The method according to any one of claims 28 to 32, wherein the association relationship is predefined, or the transceiver unit is further configured to receive the association relationship sent by the network device.

34. The method according to any one of claims 28 to 33, wherein the one or more groups of values of the cell selection parameter are in one-to-one correspondence with the one or more pieces of service information.

35. The method according to any one of claims 28 to 34, wherein the transceiver unit is further configured to receive the one or more groups of values of the cell selection parameter that are sent by the network device by using a broadcast signal; or the transceiver unit is further configured to receive the one or more groups of values of the cell selection parameter and the association relationship that are sent by the network device by using a broadcast signal.

36. The method according to any one of claims 28 to 35, wherein the one or more groups of values of the cell selection parameter are used for cell selection or cell reselection; and
the processing unit is further configured to perform cell selection or cell reselection based on the first parameter.

37. The method according to any one of claims 28 to 36, wherein a group of values of the cell selection parameter indicates at least one of required minimum received reference signal received power RSRP for cell selection or required minimum received reference signal received quality RSRQ for cell selection.

38. The method according to any one of claims 28 to 37, wherein the one or more pieces of service information are determined by a core network, or the one or more pieces of service information are determined by a radio access network RAN.

39. A communication apparatus, comprising a processor, wherein the processor is coupled to at least one memory, and the processor is configured to read a computer program stored in the at least one memory, to perform the method according to any one of claims 1 to 8, or the method according to any one of claims 9 to 19.

40. A computer-readable storage medium, wherein the computer-readable storage medium is configured to store a computer program, and when the computer program is run on a computer, the computer is caused to perform the method according to any one of claims 1 to 8, or the computer is caused to perform the method according to any one of claims 9 to 19.

41. A computer program product, wherein when the computer program product runs on a computer, the computer is caused to perform the method according to any one of claims 1 to 8, or the computer is caused to perform the method according to any one of claims 9 to 19.

42. A chip, comprising a processor and a communication interface, wherein the processor is configured to read instructions or a computer program, to perform the method according to any one of claims 1 to 8, or cause a computer to perform the method according to any one of claims 9 to 19.

**43.** A communication system, comprising the network device according to any one of claims 20 to 27 and the terminal device according to any one of claims 28 to 38.

Communication
system 100

Network device 110

((o))

Terminal device 105

Terminal device 101

Terminal
device
106

Terminal device 102

Terminal device 104

Terminal device 103

FIG. 1

200

| Network device | Terminal device |

S210: Determine one or more groups of values of a cell selection parameter

S220: Send the one or more groups of values of the cell selection parameter

S230: Receive the one or more groups of values of the cell selection parameter, and perform cell selection based on the one or more groups of values of the cell selection parameter

FIG. 2

Communication device 300

Transceiver unit 320

Processing unit 310

FIG. 3

Communication device 400

Transceiver unit 410

Processing unit 420

FIG. 4

Communication apparatus 500

Processor 510

Memory 520

FIG. 5

Communication system 600

Terminal device 610

Network device 620

FIG. 6

## INTERNATIONAL SEARCH REPORT

| International application No. |
|---|
| **PCT/CN2023/132839** |

**A. CLASSIFICATION OF SUBJECT MATTER**

H04W 48/20(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, VEN, CJFD, CNTXT, ENTXTC: 业务, 关联, 小区, 选择, 参数, 网络设备, 终端, 对应, 广播, 重选, 参考信号接收功率, 参考信号接收质量, 业务类型, 核心网, 无线接入网, Traffic, Association, Cell, Selection, Parameters, Network Equipment, Terminal, Correspondence, Broadcast, Reselection, Reference Signal Received Power, RSRP , Reference Signal Received Quality, RSRQ, Traffic Type, Core Network, Radio Access Network, RAN

**C. DOCUMENTS CONSIDERED TO BE RELEVANT**

| Category* | Citation of document, with indication, where appropriate, of the relevant passages | Relevant to claim No. |
|---|---|---|
| X | WO 2022143563 A1 (HUAWEI TECHNOLOGIES CO., LTD.) 07 July 2022 (2022-07-07) description, pages 23-25 and 28 | 1-43 |
| A | CN 108738096 A (VIVO COMMUNICATION TECHNOLOGY CO., LTD.) 02 November 2018 (2018-11-02) entire document | 1-43 |
| A | CN 102484573 A (FUJITSU LTD.) 30 May 2012 (2012-05-30) entire document | 1-43 |
| A | CN 108702697 A (HUAWEI TECHNOLOGIES CO., LTD.) 23 October 2018 (2018-10-23) entire document | 1-43 |
| A | US 2022159560 A1 (NEC CORPORATION) 19 May 2022 (2022-05-19) entire document | 1-43 |

☐ Further documents are listed in the continuation of Box C.    ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **05 January 2024** | **23 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/132839**

| Patent document cited in search report | | | Publication date (day/month/year) | Patent family member(s) | | | Publication date (day/month/year) |
|---|---|---|---|---|---|---|---|
| WO | 2022143563 | A1 | 07 July 2022 | EP | 4250817 | A1 | 27 September 2023 |
| | | | | CN | 114698044 | A | 01 July 2022 |
| CN | 108738096 | A | 02 November 2018 | None | | | |
| CN | 102484573 | A | 30 May 2012 | US | 2012165066 | A1 | 28 June 2012 |
| | | | | KR | 20120054088 | A | 29 May 2012 |
| | | | | EP | 2476219 | A1 | 18 July 2012 |
| | | | | JP | 2013504905 | A | 07 February 2013 |
| | | | | WO | 2011029458 | A1 | 17 March 2011 |
| CN | 108702697 | A | 23 October 2018 | WO | 2017147787 | A1 | 08 September 2017 |
| US | 2022159560 | A1 | 19 May 2022 | WO | 2020194940 | A1 | 01 October 2020 |

Form PCT/ISA/210 (patent family annex) (July 2022)